(19) Europäisches Patentamt
European Patent Office
Office européen des brevets

(11) **EP 4 200 586 B1**

(12) **EUROPÄISCHE PATENTSCHRIFT**

(45) Veröffentlichungstag und Bekanntmachung des Hinweises auf die Patenterteilung:
**19.06.2024 Patentblatt 2024/25**

(21) Anmeldenummer: **21746429.6**

(22) Anmeldetag: **16.07.2021**

(51) Internationale Patentklassifikation (IPC):
**G01L 19/06** (2006.01)

(52) Gemeinsame Patentklassifikation (CPC):
**G01L 19/0672**

(86) Internationale Anmeldenummer:
**PCT/EP2021/070005**

(87) Internationale Veröffentlichungsnummer:
**WO 2022/037864 (24.02.2022 Gazette 2022/08)**

(54) **DRUCKMESSGERÄT ZUR MESSUNG EINES DRUCKES**

PRESSURE MEASURING UNIT FOR MEASURING A PRESSURE

MANOMÈTRE DESTINÉ À LA MESURE D'UNE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2020 DE 102020121981**

(43) Veröffentlichungstag der Anmeldung:
**28.06.2023 Patentblatt 2023/26**

(73) Patentinhaber: **Endress+Hauser SE+Co. KG
79689 Maulburg (DE)**

(72) Erfinder:
• **PONATH, Nils
79539 Lörrach (DE)**
• **RUPP, Armin
79576 Weil am Rhein (DE)**
• **LILL, Dirk
79100 Freiburg (DE)**

(74) Vertreter: **Laufer, Michael
Endress + Hauser Group Services
(Deutschland) AG+Co. KG
Colmarer Straße 6
79576 Weil am Rhein (DE)**

(56) Entgegenhaltungen:
**US-A1- 2013 086 990**

EP 4 200 586 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Druckmessgerät zur Messung eines Druckes.

In der Automatisierungstechnik werden häufig Druckmessgeräte eingesetzt, die zur Überwachung eines Prozessmediums dienen. Derartige Druckmessgeräte bestehen für gewöhnlich aus einem Prozessanschluss der zum Befestigen des Druckmessgerätes in einer Messstelle in einer Automatisierungsanlage dient. In den Prozessanschluss wird frontbündig, d.h. zum Prozess hin gerichtet, eine Druckmesszelle eingesetzt, die durch eine Prozessdichtung gegenüber dem Prozess abgedichtet ist, sodass kein Prozessmedium austreten bzw. in das Gehäuse des Druckmessgerätes eintreten kann.

Bei hygienischen Anwendungen, also Prozessen, bei denen ein hoher Anspruch an die Reinheit gestellt wird, bspw. der Lebensmittelindustrie, der Pharmazie oder auch der Biochemie, wird von entsprechenden Zertifizierungsstellen, bspw. der 3-A oder der European Hygienic Equipment Design Group (im Folgenden auch kurz. EHEDG) eine Erkennung einer undichten Prozessdichtung vorgeschrieben.

Eine Möglichkeit eine solche undichte Prozessdichtung zu erkennen ist der Einsatz von elektronischen Mitteln, bspw. eines Sensors in Form einer elektronischen Nase, der das Eintreten des Prozessmediums in ein Gehäuse des Druckmessgerätes erkennt. Ein derartiger Ansatz ist beispielsweise in der DE 102 55 279 A1 beschrieben.

Dokument US 2013/086990 A1 (HÜGEL MICHAEL [DE]) 11. April 2013 (2013-04-11) beschreibt ein Beispiel einer Druckmesseinrichtung in der einerseits die Druckmesszelle spannungsfrei in der Messzellenkammer gelagert wird und andererseits die Dichtring auch unter Druckbelastung radial positioniert wird.

Nachteilig hieran ist, dass zum einen der Sensor in das Druckmessgerät integriert werden muss und zusätzlich eine entsprechende Elektronik zum Ansteuern des Sensors benötigt wird.

Es ist somit eine Aufgabe der Erfindung eine einfachere Möglichkeit der Überwachung einer Prozessdichtung auf Undichtigkeit hin vorzuschlagen.

Die Aufgabe wird erfindungsgemäß gelöst durch das Druckmessgerät gemäß Patentanspruch 1.

Das erfindungsgemäße Druckmessgerät zur Messung eines Druckes umfasst:

- eine Druckmesszelle;
- eine rotationssymmetrische Sensorbuchse in die die Druckmesszelle eingebracht ist;
- einen rotationssymmetrischen Prozessanschluss zur lösbaren Befestigung des Druckmessgerätes an einer Wand einer Messstelle, wobei der Prozessanschluss an einem Ende eine für die Sensorbuchse gedachte sich nach innen erstreckende umlaufende Anschlagsfläche und an einem anderen Ende eine Öffnung zur Aufnahme der Sensorbuchse aufweist, wobei die Sensorbuchse mit der Druckmesszelle in einem eingebauten Zustand durch die Öffnung bis zu der Anschlagsfläche in den Prozessanschluss eingeführt ist, sodass die Druckmesszelle im Wesentlichen frontbündig in die Messstelle eingebracht ist;
- eine ringartige Prozessdichtung, die in einer Abdichtungsebene zwischen der Sensorbuchse und der Anschlagsfläche des Prozessanschlusses ringartig radial umläuft und abdichtet, umso ein Eindringen des Prozessmediums in das Druckmessgerät zu verhindern;
- wobei die Anschlagsfläche des Prozessanschlusses und/oder eine im eingebauten Zustand zu der Anschlagsfläche gerichteten Gegenanschlagsfläche der Sensorbuchse mehrere einzeln ausgebildete Stege aufweisen, die derartig ausgebildet sind, dass in dem eingebauten Zustand zwischen der Gegenanschlagsfläche der Sensorbuchse und der Anschlagsfläche des Prozessanschlusses mehrere Öffnungen mit einer definierter Höhe und eine durch die Anordnung der Stege definierten Breite entstehen, wobei die mehreren Öffnungen zusammen einen aus mehreren zueinander parallel verlaufenden fluidischen Einzelpfaden bestehenden fluidischen Pfadverbund ausbilden, über den, im Falle eines Versagens der Prozessdichtung, das Prozessmedium von der Abdichtungsebene bei der Prozessdichtung zu mindestens einer von einer im eingebauten Zustand des Druckmessgerätes von außen sichtbaren Öffnung geleitet wird, wobei die Stege derartig ausgebildet sind, dass eine Summe der Einzelquerschnitte der mehreren Öffnungen einem vorgegebenen Minimalquerschnitt entspricht, wobei die definierte Höhe und die definierte Breite zur Berechnung der Einzelquerschnitte herangezogen wird und wobei die Stege in Abhängigkeit von den Eigenschaften der Prozessdichtung so ausgebildet sind, dass die Prozessdichtung nicht in die Öffnungen extrudiert.

Es wird ein Druckmessgerät vorgeschlagen, bei dem eine Erkennung von Undichtigkeiten an der Prozessdichtung dadurch ermöglicht wird, dass das Prozessmedium über einen internen fluidischen Pfadverbund von der Stelle der Leckage (in der Abdichtungsebene der Prozessdichtung zwischen Sensorbuchse und Prozessanschluss) zu einer von außen für einen Bediener/Servicetechniker gut erkennbaren Leckage-Öffnung geleitet wird. Durch das Austreten des Prozessmediums aus der Leckage-Öffnung wird eine Undichtigkeit der Prozessdichtung signalisiert. Der interne fluidische Pfadverbund umfasst dabei nicht nur einen einzigen Pfad durch den das Prozessmedium geleitet wird, sondern mehrere zueinander parallel verlaufende Einzelpfade, über die das Prozessmedium von der undichten Prozessdichtung zu der Leckage-Öffnung geleitet wird.

Um eine Beschädigung der Dichtung, bspw.

durch das Extrudieren der Dichtung in die durch die ausgebildeten Stege entstehenden Öffnungen zu verhindern, werden erfindungsgemäß Stege vorgeschlagen, die so ausgebildet sind, dass Öffnungen entstehen, in die die Dichtung nicht mehr, oder zumindest nicht in einem größeren Ausmaß, extrudieren kann. Die Stege werden dabei derartig ausgeführt, dass ein Gesamtquerschnitt, der sich aus der Summe der Einzelquerschnitte jeder Öffnung ergibt, einen vorgegebene Minimalquerschnitt entspricht bzw. diesen nicht unterschreitet. Der minimale Querschnitt kann insbesondere durch einen Standard, ganz besonders einem Hygiene Standard der European Hygienic Equipment Design Group und/oder 3-A, vorgegebenen Minimalquerschnitt vorgegeben sein. Hinsichtlich der Breite der Öffnungen ist zur Bestimmung des Gesamtquerschnitts der Öffnungen die minimale Breite einer jeden Öffnung heranzuziehen, d.h. die Breite der Öffnung, an die die Prozessdichtung angrenzt bzw. an der diese anliegt.

Eine vorteilhafte Ausgestaltung des Druckmessgerätes sieht vor, dass die Stege so ausgebildet sind, dass die definierte Höhe ein für die Prozessdichtung vorgegebenes Spaltmaß nicht überschreitet. Dies bedeutet, dass die Stege derartig ausgeführt sind, dass die definierte Höhe der Öffnungen deutlich kleiner, d.h. mindestens ein Faktor 15, vorzugsweise mindestens ein Faktor 20, ganz besonders bevorzugt mindestens ein Faktor 25 kleiner als ein Durchmesser der Prozessdichtung ist.

Eine weitere vorteilhafte Ausgestaltung des Druckmessgerätes sieht vor, dass die Stege so ausgebildet sind, dass die definierte Höhe kleiner 0,20 mm, vorzugsweise kleiner 0,15 mm, besonders bevorzugt kleiner 0,10 mm, ganz besonders bevorzugt ca. 0,08 mm ist.

Eine weitere vorteilhafte Ausgestaltung des Druckmessgerätes sieht vor, dass die Stege radial von der Prozessdichtung zurückversetzt sind, sodass eine zur Prozessdichtung gerichtete Kante der Stege keinen Kontakt zu der noch nicht extrudierten Prozessdichtung im eingebauten Zustand hat. Durch das Zurückversetzen der Stege in Bezug auf die Prozessdichtung befinden sich die Stege in einem Bereich in den die Dichtung nicht im Normalfall extrudiert.

Eine weitere vorteilhafte Ausgestaltung des Druckmessgerätes sieht vor, dass eine äußere Mantelfläche der Sensorbuchse in einem unteren Teilbereich, welcher im eingebauten Zustand an eine innere Mantelfläche des Prozessanschlusses angrenzt und/oder die innere Mantelfläche des Prozessanschlusses in einem unteren Teilbereich, welcher im eingebauten Zustand an eine bzw. die äußere Mantelfläche des unteren Teilbereichs der Sensorbuchse angrenzt, mehrere vertikale Ausnehmungen aufweist bzw. aufweisen, wobei die mehreren vertikalen Ausnehmungen so ausgebildet sind, dass die Querschnittssumme der einzelnen Querschnitte der mehreren vertikalen Ausnehmungen dem vorgegebenen Minimalquerschnitt entspricht. Insbesondere kann die Ausgestaltung vorsehen, dass die Sensorbuchse in dem unteren Teilbereich und/oder der Prozessanschluss in dem unteren Teilbereich zumindest eine umlaufende Sammelnut zum Sammeln des über die mehreren Öffnungen zugeführten Prozessmediums aufweist bzw. aufweisen, wobei die zumindest eine Sammelnut so ausgebildet ist, dass ein Querschnitt der Sammelnut dem vorgegebenen Minimalquerschnitt entspricht.

Eine weitere vorteilhafte Ausgestaltung des Druckmessgerätes sieht vor, dass die Sensorbuchse eine umlaufenden Absatzring aufweist bis zu dem die Sensorbuchse im eingebauten Zustand in die Öffnung des Prozessanschlusses eingeführt ist, und wobei die Sensorbuchse eine weitere an den Absatzring, vorzugsweise direkt angrenzende umlaufende Sammelnut aufweist, die dazu ausgebildet ist, das Prozessmedium zu der zumindest einen von außen sichtbaren Leckage-Öffnung zu leiten, wobei die weitere Sammelnut so ausgebildet ist, dass ein Querschnitt der weiteren Sammelnut dem vorgegebenen Minimalquerschnitt entspricht. Insbesondere kann die Ausgestaltung vorsehen, dass die Sensorbuchse in dem unteren Teilbereich und/oder der Prozessanschluss in dem unteren Teilbereich zumindest eine umlaufende Sammelnut zum Sammeln des über die mehreren Öffnungen zugeführten Prozessmediums aufweist bzw. aufweisen, wobei die zumindest eine Sammelnut so ausgebildet ist, dass ein Querschnitt der Sammelnut dem vorgegebenen Minimalquerschnitt entspricht.

Eine weitere vorteilhafte Ausgestaltung des Druckmessgerätes sieht vor, dass die Sensorbuchse eine umlaufenden Absatzring aufweist bis zu dem die Sensorbuchse im eingebauten Zustand in die Öffnung des Prozessanschlusses eingeführt ist, und wobei die Sensorbuchse eine weitere an den Absatzring, vorzugsweise direkt angrenzende umlaufende Sammelnut aufweist, die dazu ausgebildet ist, das Prozessmedium zu der zumindest einen von außen sichtbaren Leckage-Öffnung (340) zu leiten, wobei die weitere Sammelnut so ausgebildet ist, dass ein Querschnitt der weiteren Sammelnut dem vorgegebenen Minimalquerschnitt entspricht.

Eine weitere vorteilhafte Ausgestaltung des Druckmessgerätes sieht vor, dass die zumindest eine von außen sichtbare Leckage-Öffnung so ausgebildet ist, dass ein Querschnitt bzw. eine Querschnittssumme dem vorgegebenen Minimalquerschnitt entspricht.

Eine weitere vorteilhafte Ausgestaltung des Druckmessgerätes sieht vor, dass die zumindest eine von außen sichtbare Leckage-Öffnung auf einer Rückseite des Prozessanschlusses, auf dem im eingebauten Zustand der Absatzring der Sensorbuchse aufsitzt, ausgebildet ist bzw. sind.

Eine weitere vorteilhafte Ausgestaltung des Druckmessgerätes sieht vor, dass der vorgegebene Minimalquerschnitt einer Vorgabe eines Standards, insbesondere eines eine Hygiene betreffenden Standards der European Hygienic Equipment Design Group und/oder 3-A entspricht, insbesondere dem Standard 74-07 von 3-A, veröffentlicht im März 2019. Insbesondere kann die Ausgestaltung vorsehen, dass der vorgegebene Minimalquerschnitt zumindest 4,0 Quadratmillimeter (mm2), vorzugsweise zumindest 4,5 mm2, besonders bevorzugt zumindest 4,9 mm2 aufweist.

Die Erfindung wird anhand der nachfolgenden Zeichnungen näher erläutert. Es zeigt:

Fig. 1: einen Schnitt durch ein Druckmessgerät,

Fig. 2: eine Detailansicht des Bereichs des Druckmessgerätes in dem die Abdichtung des Druckmessgerätes mittels einer Prozessdichtung gegenüber dem Prozessmedium erfolgt,

Fig. 3: eine Explosionsansicht einer Sensorbuchse, der Prozessdichtung und eines Prozessanschlusses über den das Druckmessgerät an einer Messstelle angebracht wird,

Fig. 4 eine perspektivische Ansicht einer ersten Ausgestaltung der Sensorbuchse,

Fig. 5: eine perspektivische Ansicht einer zweiten Ausgestaltung der Sensorbuchse, und

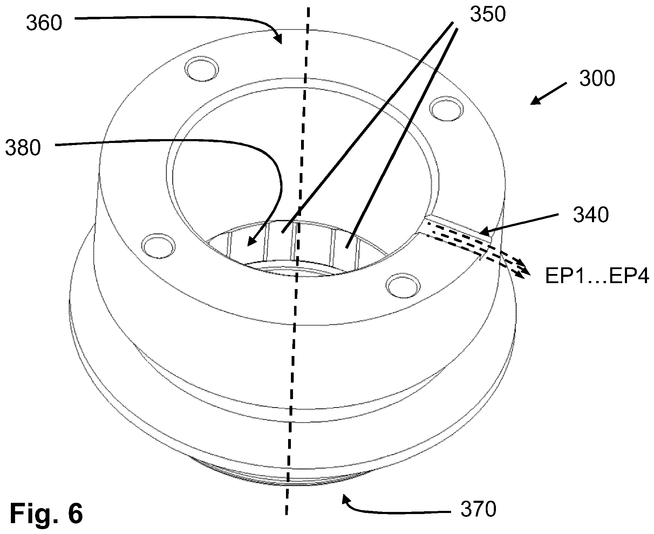

Fig. 6: eine perspektivische Ansicht einer Ausgestaltung des Prozessanschlusses.

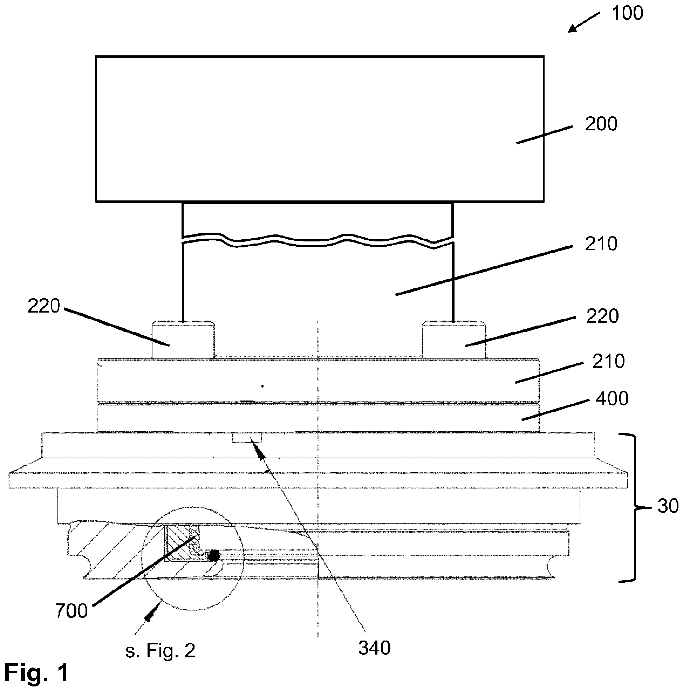

Figur 1 zeigt einen Teilschnitt durch ein Druckmessgerät 100. Das in Fig. 1 dargestellte Druckmessgerät 100 umfasst mehrere Hauptelemente, eine rotationssymmetrische Sensorbuchse 400, eine in die Sensorbuchse 400 frontbündig eingesetzte Druckmesszelle 500, einen ebenfalls rotationssymmetrischen Prozessanschluss 300 zum Befestigen des Druckmessgerätes 1 an einer Wand eines ein Prozessmedium enthaltenen Behälters oder Rohres, eine Prozessdichtung 600 zur Abdichtung der frontseitig eingesetzten Druckmesszelle 500 gegenüber dem Prozess und ein über einen Gehäuseadapter 210 befestigtes Gehäuse 200.

Die rotationssymmetrische Sensorbuchse 400 weist einen im Wesentlichen hohlzylindrischen Körper mit einem außenseitig umlaufenden Absatzring 420, einen in den Prozessanschluss 300 einführbaren an den Absatzring 420 angrenzenden unteren Teil 430 und einen an den Absatzring 420 angrenzenden oberen Teil 410 auf. Der untere Teil 430 der Sensorbuchse 400 ist derartig ausgebildet, dass die Sensorbuchse über diesen in eine entsprechende Öffnung 33 des Prozessanschluss 300 einführbar ist. Der Absatzring 420 weist mehrere, vorzugsweise konzentrische Bohrungen 421 auf, durch die das Gehäuse 202 mit dem Prozessanschluss 300 mittels Schrauben 220 verbindbar ist. Die Sensorbuchse 400 weist ferner an einem dem Gehäuse entgegengesetzten Ende eine sich nach innen erstreckende radial umlaufende Anschlagsfläche 433 auf.

Über die Anschlagsfläche 433 ist die Druckmesszelle 500 frontbündig in die Sensorbuchse 400 eingebracht und kann mit Hilfe eines zusätzlichen rotationssymmetrischen Zentrierrings 700 positioniert werden.

Der Zentrierring 700 weist einen im Wesentlichen rotationssymmetrischen L-förmigen Querschnitt mit einem kurzen und einem langen Schenkelstück 710 und 720 auf. Die Anschlagsfläche 43 und der Zentrierring 700 sind dabei derartig aufeinander abgestimmt, dass der Zentrierring 700 mit dem kurzen Schenkelstück 710 auf der Anschlagsfläche 433 aufsitzt. Ferner ist der Zentrierring 700 so ausgebildet, dass das lange Schenkelstück 720 die Druckmesszelle 500 außenseitig im Wesentlichen bündig umgibt, sodass die Druckmesszelle 500 mittig in der Sensorbuchse 400 ausgerichtet ist.

Bei der eingesetzten Druckmesszelle 500 handelt es sich vorzugsweise um eine keramische Druckmesszelle, die einen, vorzugsweise keramischen Grundkörper 510 und eine druckempfindliche, vorzugsweise keramische Messmembran 520 aufweist, die sich in Abhängigkeit eines auf sie einwirkenden Druckes aus ihrer Ruhelage herausbewegt. Die Messmembran 520 und der Grundkörper 510 sind an deren Rand unter Bildung einer Messkammer mittels einer Fügestelle 530 druckdicht miteinander gefügt.

Zur Erfassung der druckabhängige Auslenkung und Wandeln der druckabhängigen Auslenkung in ein elektrisches Signal weist die Druckmesszelle 500 ein oder mehrere Wandlerelement auf. Als Wandlerelemente kommen dabei sämtliche aus dem Stand der Technik bekannten Wandlerelemente in Betracht. Vorzugsweise handelt es sich bei den Wandlerelementen allerdings um kapazitive Wandlerelemente. Kapazitive Wandlerelemente weisen üblicherweise zumindest eine auf einer Innenseite der Messmembran angeordneten Elektrode und mindestens eine auf einer der Innenseite gegenüberliegenden, der Messmembran zugewandten Außenseite des Grundkörpers angeordnete Gegenelektrode.

Der rotationssymmetrische Prozessanschluss 300 weist wiederum an einem im eingebauten Zustand zu dem Prozess hin gerichteten Ende (Vorderseite) 370 eine sich nach innen erstreckende radial umlaufende Anschlagsfläche 310 auf, bis zu der die Sensorbuchse 400 mit der Druckmesszelle 500 in den Prozessanschluss 300 eingebracht ist. Die Druckmesszelle 500 ist dabei derartig in die Sensorbuchse 400 eingebracht, dass die druckempfindliche Messmembran 520 im eingebauten Zustand zu dem Prozess gerichtet ist (frontbündig).

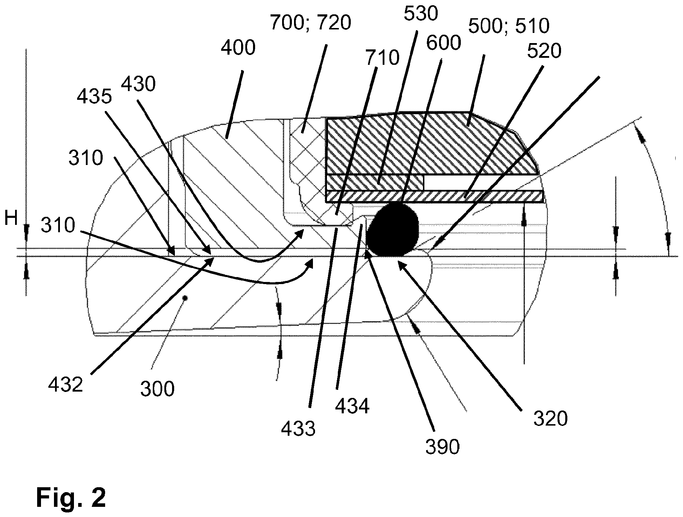

Wie in Fig. 2 dargestellt, ist eine radial umlaufende Prozessdichtung 600 zwischen der Druckmesszelle 500 und dem Prozessanschluss 300 eingebracht, um ein Eindringen des Prozessmediums zwischen dem Prozessanschluss und der Sensorbuchse zu verhindern.

Die Prozessdichtung 600 kann beispielsweise in Form eines O-Rings ausgeführt sein und aus einem gegenüber dem Prozessmedium beständigen Material bestehen. Beispielsweise kann die Prozessdichtung Ethylen-Propylen-Dien-Kautschuke (EPDM), Fluorkautschuk (FKM), Perfluorkautschuk (FFKM), Nitrilkautschuk (NBR) oder Fluroprene umfassen. Derartige Dichtungen, insbesondere in Form von O-Ringen, weisen spezifische Eigenschaften auf, die für das Dichtungsverhalten relevant sind. Beispiele solcher Eigenschaften sind ein Durchmesser bzw. Schnurdurchmesser oder eine Shorehärte der Dichtung.

Um ein Verrutschen der Prozessdichtung 600 zu verhindern, kann die Anschlagsfläche des Prozessanschlusses 310 so ausgeführt sein, dass sich die Anschlagsfläche 310 über die Anschlagsfläche der Sensorbuchse 433 für den Zentrierring hinaus weiter nach innen erstreckt und in diesem Bereich, eine Geometrie 320 zur Aufnahme der Prozessdichtung 600 aufweist. Ferner kann, um ein Kriechen der Prozessdichtung zu reduzieren, eine Nase 434 an dem inneren Ende der Anschlagsfläche der Sensorbuchse vorgesehen sein.

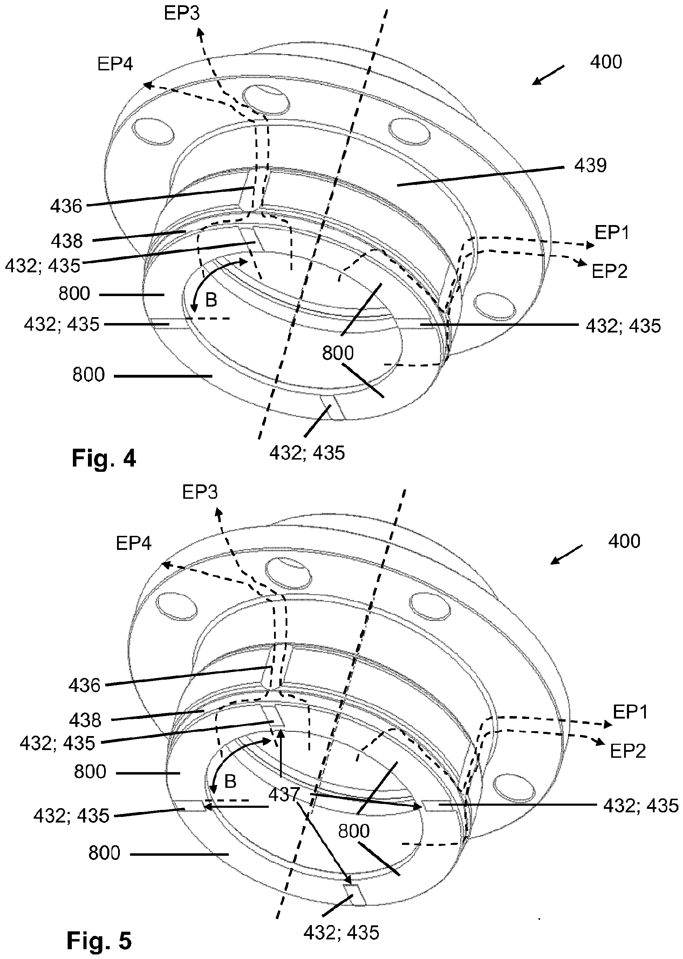

Um ein Versagen der Prozessdichtung 600 erkennen zu können, weist eine im eingebauten Zustand zu der Anschlagsfläche gerichtete Gegenanschlagsfläche 432 der Sensorbuchse 400 mehrere einzeln ausgebildete Stege 435 auf. Die Stege 435 sind dabei so ausgebildet, dass in dem eingebauten Zustand zwischen der Gegenanschlagsfläche 432 der Sensorbuchse 400 und der Anschlagsfläche 310 des Prozessanschlusses 300 mehrere Öffnungen 800 entstehen. Die Öffnungen 800 weisen eine durch die Stege definierte Höhe H und Breite B auf. In den in Fig. 4 und 5 dargestellten Ausführungsbeispielen weist die Sensorbuchse an der Stirnseite jeweils vier sich radial nach außen erstreckende Stege auf, die im eingebauten Zustand zur Ausbildung von vier Öffnungen 800 führen, über die im Versagensfall der Prozessdichtung 600 das Prozessmedium geführt wird. In Fig. 4 und 5 sind exemplarisch die im eingebauten Zustand durch die Stege ausgebildeten Öffnungen 800 angedeutet.

Die Stege 435 sind in Abhängigkeit von den spezifischen Eigenschaften der Prozessdichtung 600 so ausgebildet, dass die Prozessdichtung 600 nur schwer in die Öffnung extrudieren kann. Dies kann insbesondere dadurch erreicht werden, dass die definierte Steghöhe H ein für die im eingebauten Zustand eingesetzte Prozessdichtung vorgegebenes Spaltmaß nicht überschreitet. Das Spaltmaß wird üblicherweise durch den Hersteller der Prozessdichtung vorgegeben und hängt insbesondere von dem Druck, der auf die Prozessdichtung ausgeübt wird, dem Durchmesser bzw. Schnurdurchmesser der Prozessdichtung, der Temperatur des an die Prozessdichtung anstehenden Mediums und der Shorehärte des Werkstoffs der Prozessdichtung ab.

Beispielsweise kann für einen Prozessdruck von ≤ 3,5 MPa das Spaltmaß für eine Prozessdichtung, insbesondere für eine Prozessdichtungen die aus einem Elastomere-Werkstoff, ausgenommen Polyurethan und FEP/PFA ummantelte Prozessdichtungen, ausgebildet ist, mit einer Härte 70 Shore A kleiner 0,20 mm, vorzugsweise kleiner 0,15mm, besonders bevorzugt kleiner 0,10 mm, ganz besonders bevorzugt ca. 0,08 mm sein, sodass die definierte Höhe der Stege entsprechend kleiner ausgeführt ist.

Um eine Verletzung der Prozessdichtung zu vermeiden, können die Steg ferner so ausgebildet sein, dass eine zur Prozessdichtung orientierte Kante der Stege von der Prozessdichtung aus gesehen radial zurückversetzt sind, sodass eine zur Prozessdichtung gerichtete Kante der Stege keinen Kontakt zu der noch nicht extrudierten Prozessdichtung im eingebauten Zustand hat. Das in Fig. 5 dargestellte Ausführungsbeispiel zeigt derartig zurückversetzt ausgebildete Stege. Exemplarisch ist an einem Steg eine zurückversetzte Kante mit dem Bezugszeichen 437 angedeutet. Ergänzend oder alternativ kann, um eine Verletzung der Prozessdichtung zu vermeiden, die Kante der Sensorbuchse, die im eingebauten Zustand zu der Prozessdichtung und der Anschlagsfläche für die Sensorbuchse des Prozessanschlusses orientiert ist, abgerundet oder angefast sein. Exemplarisch ist in Fig. 2 die Kante mit dem Bezugszeichen 390 angedeutet.

Ergänzend oder alternativ zu den auf der Gegenanschlagsfläche 432 der Sensorbuchse 400 ausgebildeten Stegen 435 können auch entsprechende Stege auf der Anschlagsfläche 310 des Prozessanschlusses 300 ausgebildet sein.

Durch die Öffnungen 800 wird im Versagensfall der Prozessdichtung in der Abdichtungsebene zwischen Prozessanschluss 300 und Sensorbuchse 400 das Prozessmedium bis zu einer äußeren Mantelfläche 431 des unteren Teils 431 der Sensorbuchse 400 geleitet. Der untere Teil 431 der Sensorbuchse 400 kann dabei eine an die Stirnseite angrenzende umlaufende untere Sammelnut 438 aufweisen, in der das zugeführte Prozessmedium gesammelt wird.

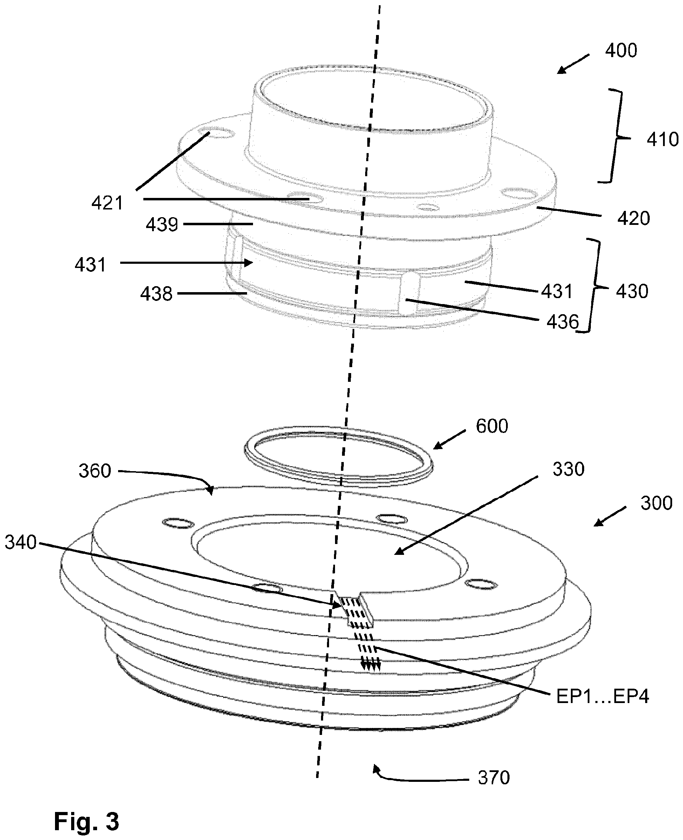

Um das Prozessmedium von der unteren Sammelnut 438 weiter zu einer von außen gut sichtbaren Leckage-Öffnung 340 zu leiten, kann, wie in Fig. 3 dargestellt, die äußere Mantelfläche des unteren Teils der Sensorbuchse 431 mehrere vertikale Ausnehmungen 436 aufweisen. Ergänzend kann der untere Teil der Sensorbuchse 400 eine direkt an den Absatzring 420 angrenzende obere Sammelnut 439 aufweisen, in die die vertikalen Ausnehmungen 436 münden. Die vertikalen Ausnehmungen 436 sind somit so ausgebildet, dass im eingebauten Zustand eine fluidische Verbindung zwischen der unteren und der oberen Sammelnut 438, 439 entsteht, über die das von den Öffnungen 800 kommende Prozessmedium geleitet wird.

Alternativ oder ergänzend zu den in die äußere Mantelfläche 431 des unteren Teils 430 der Sensorbuchse integrierten vertikalen Ausnehmungen 436 kann eine innere Mantelfläche 380 des Prozessanschlusses 300, welche im eingebauten Zustand an die äußere Mantelfläche 431 des unteren Teils 430 der Sensorbuchse 400 angrenzt, mehrere vertikale Ausnehmungen 350 aufweisen. Dies kann beispielsweise dann nützlich sein, wenn aufgrund der Ausgestaltung der Sensorbuchse diese nicht ausreichen Material im Wandungsbereich aufweist, um entsprechende vertikale Ausnehmungen realisieren zu können.

Die vertikalen Ausnehmungen 350, 436 können beispielsweise durch Fräsen an die entsprechende Stelle eingebracht worden sein. Ferner können diese beispielsweise auch in Form von Schlitzen ausgebildet sein.

Durch die Öffnungen wird in Kombination mit den vertikalen Ausnehmungen 435, 350, 436 und/oder der Sammelnut bzw. den Sammelnuten 438, 439 ein interner fluidischer Pfadverbund bestehend aus mehreren fluidischen Einzelpfaden ausgebildet, über den ein aufgrund einer defekten Prozessdichtung 600 eindringendes Prozessmedium von der Abdichtungsebene, in der die Prozessdichtung 600 eine druckdichte Verbindung zwischen der Anschlagsfläche des Prozessanschlusses und der auf der Anschlagsfläche mit der Stirnseite aufsitzenden Sensorbuchse ausbildet, zu der von außen gut sichtbaren Leckage-Öffnung 340 geführt. Die Leckage-Öffnung 340 kann dabei, wie in Fig. 5 dargestellt, auf einer von der Stirnseite abgewandten Rückseite 360 des Prozessanschlusses ausgebildet sein. Ferner können anstelle einer einzigen Leckage-Öffnung 340 auch mehrere vorgesehen sein.

Zur Verdeutlichung der fluidischen Einzelpfade EP1-EP4 sind in den Figuren 4 und 5 jeweils exemplarisch vier Einzelpfade durch gestrichelte Pfeile dargestellt. Jeder Einzelpfad umfasst somit eine Öffnung 800, die in der unteren, an die Stirnseite der Sensorbuchse 400 angrenzende, Sammelnut 438 mündet, eine vertikale Ausnehmung 436, die die untere Sammelnut 438 mit einer an den Absatzring angrenzenden oberen Sammelnut 439 mündet und die an den Absatzring angrenzende obere Sammelnut 439.

Die Öffnungen 800 bzw. vertikalen Ausnehmungen sind so ausgebildet, dass eine Summe der Einzelquerschnitte $A_{Öffnung\_n}$ der mehreren Öffnungen 800 bzw. der vertikalen Ausnehmungen $A_{Ausnehmung\_n}$ entlang des fluidischen Pfades einem vorgegebenen Minimalquerschnitt entspricht, d.h.

$$\sum_{i=1}^{n} A_{Öffnung\_n} = A_{Minimal}$$ bzw.

$$\sum_{i=1}^{n} A_{Ausnehmung\_n} = A_{Minimal.}$$

Die Einzelquerschnitte $A_{Öffnung\_n}$ ergeben sich hierbei durch das Produkt der definierten Höhe H und der minimalen Breite B. Als Breite B wird die Breite der jeweiligen Öffnung verwendet, an die die Prozessdichtung anliegt. Der vorgegebene Minimalquerschnitt entspricht dabei einer Vorgabe aus einem Standard, insbesondere einem Standard (Hygienestandard) der European Hygienic Equipment Design Group (EHEDG) und/oder 3-A. Insbesondere entspricht der vorgegebene Minimalquerschnitt dem Standard 74-07, veröffentlicht im März 2019. Beispielsweise kann der vorgegebene Minimalquerschnitt zumindest 4,9 Quadratmillimeter (mm2), vorzugsweise zumindest 5 Quadratmillimeter (mm2), besonders bevorzugt zumindest 7,2 Quadratmillimeter (mm2) aufweisen.

**Bezugszeichenliste**

| | |
|---|---|
| 100 | Druckmessgerät |
| 200 | Gehäuse |
| 210 | Gehäuseadapter |
| 220 | Schrauben |
| 300 | Prozessanschluss |
| 310 | Anschlagsfläche für Sensorbuchse |
| 320 | Geometrie zur Aufnahme und Fixierung der Prozessdichtung |
| 330 | Öffnung zur Aufnahme der Sensorbuchse |
| 340 | Leckage-Öffnung zum Signalisieren einer undichten Prozessdichtung |
| 350 | Vertikale Ausnehmungen |
| 360 | Rückseite des Prozessanschlusses |
| 370 | Vorderseite des Prozessanschlusses |
| 380 | Innere Mantelfläche des Prozessanschlusses |
| 390 | Kante des Prozessanschlusses, die zu der Prozessdichtung und der Anschlagsfläche für die Sensorbuchse gerichtet ist |
| 400 | Sensorbuchse |
| 410 | Oberer Teil der Sensorbuchse |
| 420 | Absatzring |
| 421 | Bohrungen |
| 430 | Unterer Teil der Sensorbuchse |
| 431 | Äußere Mantelfläche des unteren Teils der Sensorbuchse |
| 432 | Gegenanschlagsfläche für Prozessanschluss |
| 433 | Anschlagsfläche für Zentrierring |
| 434 | Nase |
| 435 | Stege |
| 436 | Vertikale Ausnehmungen |
| 437 | Kante der Stege die zur Prozessdichtung gerichtet ist |
| 438 | Untere Sammelnut |
| 439 | Obere Sammelnut |
| 500 | Druckmesszelle |
| 510 | Grundkörper |
| 520 | Messmembran |
| 530 | Fügestelle |
| 600 | Ringartige Prozessdichtung, insb. O-Ring |
| 700 | Zentrierring |
| 710 | Kurzes Schenkelstück des Zentrierrings |
| 720 | Langes Schenkelstück des Zentrierrings |
| 800 | Öffnungen, die im eingebauten Zustand entstehen |
| H | Höhe der Öffnung im eingebauten Zustand |
| B | Breite der Öffnung im eingebauten Zustand |
| EP1-EP4 | Exemplarisch dargestellte fluidische Einzelpfade |

**Patentansprüche**

1. Druckmessgerät zur Messung eines Druckes, aufweisend:

   - eine Druckmesszelle (500);
   - eine rotationssymmetrische Sensorbuchse (400) in die die Druckmesszelle (500) eingebracht ist;
   - einen rotationssymmetrischen Prozessanschluss (300) zur lösbaren Befestigung des Druckmessgerätes (100) an einer Wand einer Messstelle, wobei der Prozessanschluss (300) an einem Ende (370) eine für die Sensorbuchse gedachte sich nach innen erstreckende umlaufende Anschlagsfläche (310) und an einem anderen Ende (380) eine Öffnung (330) zur Aufnahme der Sensorbuchse aufweist, wobei die Sensorbuchse (400) mit der Druckmesszelle (500) in einem eingebauten Zustand durch die Öffnung (330) bis zu der Anschlagsfläche (310) in den Prozessanschluss (300) eingeführt ist, sodass die Druckmesszelle (500) im Wesentlichen frontbündig in die Messstelle eingebracht ist;
   - eine ringartige Prozessdichtung (600), die in einer Abdichtungsebene zwischen der Sensorbuchse (400) und der Anschlagsfläche (310) des Prozessanschlusses (300) ringartig radial umläuft und abdichtet, umso ein Eindringen des Prozessmediums in das Druckmesserät (100) zu verhindern, 1f
   dadurchgekennzeichnet, dass
   - die Anschlagsfläche (310) des Prozessanschlusses (300) und/oder eine im eingebauten Zustand zu der Anschlagsfläche gerichteten Gegenanschlagsfläche (432) der Sensorbuchse (400) mehrere einzeln ausgebildete Stege (435) aufweisen, die derartig ausgebildet sind, dass in dem eingebauten Zustand zwischen der Gegenanschlagsfläche (432) der Sensorbuchse (400) und der Anschlagsfläche (310) des Prozessanschlusses (300) mehrere Öffnungen (800) mit einer definierten Höhe (H) und eine durch die Anordnung der Stege definierten Breite (B) entstehen, wobei die mehreren Öffnungen (800) zusammen einen aus mehreren zueinander parallel verlaufenden fluidischen Einzelpfaden (EP1-EP4) bestehenden fluidischen Pfadverbund ausbilden, über den, im Falle eines Versagens der Prozessdichtung, das Prozessmedium von der Abdichtungsebene bei der Prozessdichtung (600) zu mindestens einer von einer im eingebauten Zustand des Druckmessgerätes von außen sichtbaren Leckage-Öffnung (340) geleitet wird, wobei die Stege (435) derartig ausgebildet sind, dass eine Summe der Einzelquerschnitte der mehreren Öffnungen (800) einem vorgegebenen Minimalquerschnitt entspricht, wobei die definierte Höhe (H) und die definierte Breite (B) zur Berechnung der Einzelquerschnitte herangezogen wird und wobei die Stege in Abhängigkeit von den Eigenschaften der Prozessdichtung so ausgebildet sind, dass die Prozessdichtung nicht in die Öffnungen extrudiert.

2. Druckmessgerät nach Anspruch 1, wobei die Stege (435) so ausgebildet sind, dass die definierte Höhe (H) ein für die Prozessdichtung vorgegebenes Spaltmaß nicht überschreitet.

3. Druckmessgerät nach dem vorhergehenden Anspruch, wobei die Stege (435) so ausgebildet sind, dass die definierte Höhe kleiner 0,20 mm, vorzugsweise kleiner 0,15 mm, besonders bevorzugt kleiner 0,10 mm, ganz besonders bevorzugt ca. 0,08 mm ist.

4. Druckmessgerät nach einem der vorhergehenden Ansprüche, wobei die Stege (435) radial von der Prozessdichtung zurückversetzt sind, sodass eine zur Prozessdichtung gerichtete Kante der Stege (437) keinen Kontakt zu der noch nicht extrudierten Prozessdichtung im eingebauten Zustand hat.

5. Druckmessgerät nach einem der vorhergehenden Ansprüche, wobei eine äußere Mantelfläche (431) der Sensorbuchse (400) in einem unteren Teilbereich (430), welcher im eingebauten Zustand an eine innere Mantelfläche (380) des Prozessanschlusses (300) angrenzt und/oder die innere Mantelfläche (380) des Prozessanschlusses (300) in einem unteren Teilbereich, welcher im eingebauten Zustand an eine bzw. die äußere Mantelfläche des unteren Teilbereichs der Sensorbuchse angrenzt, mehrere vertikale Ausnehmungen (436) aufweist bzw. aufweisen, wobei die mehreren vertikalen Ausnehmungen (436) so ausgebildet sind, dass die Querschnittssumme der einzelnen Querschnitte der mehreren vertikalen Ausnehmungen (436) dem vorgegebenen Minimalquerschnitt entspricht.

6. Druckmessgerät nach dem vorhergehenden Anspruch, wobei die Sensorbuchse (400) in dem unteren Teilbereich (430) und/oder der Prozessanschluss (300) in dem unteren Teilbereich zumindest eine umlaufende Sammelnut (438) zum Sammeln des über die mehreren Öffnungen (800) zugeführten Prozessmediums aufweist bzw. aufweisen, wobei die zumindest eine Sammelnut (438) so ausgebildet ist, dass ein Querschnitt der Sammelnut dem vorgegebenen Minimalquerschnitt entspricht.

7. Druckmessgerät nach einem der vorhergehenden Ansprüche, wobei die Sensorbuchse (400) eine umlaufenden Absatzring (420) aufweist bis zu dem die Sensorbuchse im eingebauten Zustand in die Öffnung (330) des Prozessanschlusses (300) eingeführt ist, und wobei die Sensorbuchse (300) eine weitere an den Absatzring (420), vorzugsweise direkt angrenzende umlaufende Sammelnut (439) aufweist, die dazu ausgebildet ist, das Prozessmedium zu der zumindest einen von außen sichtbaren Leckage-Öffnung (340) zu leiten, wobei die weitere Sammelnut (439) so ausgebildet ist, dass ein Querschnitt der weiteren Sammelnut dem vorgegebenen Minimalquerschnitt entspricht.

8. Druckmessgerät nach einem der vorhergehenden Ansprüche, wobei die zumindest eine von außen sichtbare Leckage-Öffnung (340) so ausgebildet ist, dass ein Querschnitt bzw. eine Querschnittsumme dem vorgegebenen Minimalquerschnitt entspricht.

9. Druckmessgerät nach dem vorhergehenden Anspruch, wobei die zumindest eine von außen sichtbare Leckage-Öffnung (340) auf einer Rückseite (360) des Prozessanschlusses (300), auf dem im eingebauten Zustand der Absatzring (420) der Sensorbuchse (400) aufsitzt, ausgebildet ist bzw. sind.

10. Druckmessgerät nach einem der vorhergehenden Ansprüche, wobei der vorgegebene Minimalquerschnitt einer Vorgabe eines Standards, insbesondere eines eine Hygiene betreffenden Standards der European Hygienic Equipment Design Group und/oder 3-A entspricht, insbesondere dem Standard 74-07 von 3-A, veröffentlicht im März 2019.

**Claims**

1. Pressure measuring device for measuring a pressure, comprising:

   - a pressure measuring cell (500);
   - a rotationally symmetrical sensor bushing (400) into which the pressure measuring cell (500) is inserted;
   - a rotationally symmetrical process connection (300) for detachably fastening the pressure measuring device (100) to a wall of a measuring point, wherein the process connection (300) has at one end (370) a circumferential stop surface (310) extending inwards and intended for the sensor bushing and at another end (380) an opening (330) for receiving the sensor bushing, wherein the sensor bushing (400) with the pressure measuring cell (500) is inserted in an installed state through the opening (330) as far as the stop surface (310) into the process connection (300), so that the pressure measuring cell (500) is introduced into the measuring point substantially flush with the front;

   - a ring-like process seal (600), which runs radially in a ring-like manner in a sealing plane between the sensor bushing (400) and the stop surface (310) of the process connection (300) and seals in order to prevent the process medium from penetrating into the pressure measuring device (100)

   **characterized in that**

   - the stop surface (310) of the process connection (300) and/or a counter-stop surface (432) of the sensor bushing (400), which is directed towards the stop surface in the installed state, have a plurality of individually formed webs (435) which are formed in such a manner, that, in the installed state, a plurality of openings (800) with a defined height (H) and a width (B) defined by the arrangement of the webs are formed between the mating stop surface (432) of the sensor bushing (400) and the stop surface (310) of the process connection (300), the plurality of openings (800) together forming a fluidic path network consisting of a plurality of individual fluidic paths (EP1-EP4) running parallel to one another, via which, in the event of a failure of the process seal, the process medium is conducted from the sealing plane at the process seal (600) to at least one leakage opening (340) which is visible from the outside when the pressure measuring device is installed, the webs (435) being designed in such a way, that a sum of the individual cross-sections of the plurality of openings (800) corresponds to a predetermined minimum cross-section, the defined height (H) and the defined width (B) being used to calculate the individual cross-sections, and the webs being designed as a function of the properties of the process seal in such a way that the process seal does not extrude into the openings.

2. Pressure measuring device according to claim 1, wherein the webs (435) are designed such that the defined height (H) does not exceed a gap dimension predetermined for the process seal.

3. Pressure measuring device according to the preceding claim, wherein the webs (435) are designed such that the defined height is less than 0.20 mm, preferably less than 0.15 mm, more preferably less than 0.10 mm, most preferably about 0.08 mm.

4. Pressure measuring device according to one of the preceding claims, wherein the webs (435) are set back radially from the process seal, so that an edge of the webs (437) directed towards the process seal has no contact with the not yet extruded process seal in the installed state.

5. Pressure measuring device according to one of the preceding claims, wherein an outer lateral surface (431) of the sensor bushing (400) in a lower partial region (430), which in the installed state is adjacent to an inner lateral surface (380) of the process connection (300) and/or the inner lateral surface (380) of the process connection (300) in a lower partial region, which in the installed state is adjacent to a or the outer circumferential surface of the lower part of the sensor bushing in the installed state, has or has a plurality of vertical recesses (436), the plurality of vertical recesses (436) being designed such that the cross-sectional sum of the individual cross-sections of the plurality of vertical recesses (436) corresponds to the predetermined minimum cross-section.

6. Pressure measuring device according to the preceding claim, wherein the sensor bushing (400) in the lower subregion (430) and/or the process connection (300) in the lower subregion has or have at least one circumferential collecting groove (438) for collecting the process medium supplied via the plurality of openings (800), wherein the at least one collecting groove (438) is designed such that a cross-section of the collecting groove corresponds to the predetermined minimum cross-section.

7. Pressure measuring device according to one of the preceding claims, wherein the sensor bushing (400) has a circumferential shoulder ring (420) up to which the sensor bushing is inserted into the opening (330) of the process connection (300) in the installed state, and wherein the sensor bushing (300) has a further circumferential collecting groove (439) preferably directly adjacent to the shoulder ring (420), preferably directly adjacent to the shoulder ring (420), which is designed to guide the process medium to the at least one leakage opening (340) visible from the outside, the further collecting groove (439) being designed such that a cross-section of the further collecting groove corresponds to the predetermined minimum cross-section.

8. Pressure measuring device according to one of the preceding claims, wherein the at least one leakage opening (340) visible from the outside is designed such that a cross-section or a sum of cross-sections corresponds to the predetermined minimum cross-section.

9. Pressure measuring device according to the preceding claim, wherein the at least one externally visible leakage opening (340) is or are formed on a rear side (360) of the process connection (300), on which the shoulder ring (420) of the sensor bushing (400) rests in the installed state.

10. Pressure measuring device according to one of the preceding claims, wherein the predetermined minimum cross-section corresponds to a specification of a standard, in particular a standard relating to hygiene of the European Hygienic Equipment Design Group and/or 3-A, in particular standard 74-07 of 3-A, published in March 2019.

**Revendications**

1. Dispositif de mesure de pression pour mesurer une pression, comprenant :

   - une cellule de mesure de la pression (500) ;
   - une douille de capteur à symétrie de rotation (400) dans laquelle est insérée la cellule de mesure de la pression (500) ;
   - un raccord de processus (300) à symétrie de rotation pour fixer de manière amovible le dispositif de mesure de la pression (100) à la paroi d'un point de mesure, dans lequel le raccord de processus (300) présente à une extrémité (370) une surface de butée circonférentielle (310) s'étendant vers l'intérieur et destinée à la douille du capteur et à une autre extrémité (380) une ouverture (330) destinée à recevoir la douille du capteur, dans lequel la douille de capteur (400) avec la cellule de mesure de la pression (500) est insérée à l'état installé à travers l'ouverture (330) jusqu'à la surface de butée (310) dans le raccord de processus (300), de sorte que la cellule de mesure de la pression (500) est introduite dans le point de mesure sensiblement au même niveau que l'avant ;
   - un joint de processus en forme d'anneau (600), qui s'étend radialement en forme d'anneau dans un plan d'étanchéité entre la douille du capteur (400) et la surface d'arrêt (310) du raccord de processus (300) et qui s'étanche afin d'empêcher le fluide de processus de pénétrer dans le dispositif de mesure de la pression (100) **caractérisé par le fait que**
   - la surface d'arrêt (310) du raccord de processus (300) et/ou une surface de contre-arrêt (432) de la douille de capteur (400), qui est dirigée vers la surface d'arrêt à l'état installé, ont une pluralité de bandes formées individuellement (435) qui sont formées de telle manière que, à l'état installé, plusieurs ouvertures (800) d'une hauteur (H) et d'une largeur (B) définies par la disposition des bandes sont formées entre la surface de butée (432) de la douille de capteur (400) et la surface de butée (310) du raccord de processus (300), les plusieurs ouvertures (800) formant ensemble un réseau de voies fluidiques constitué de plusieurs voies fluidiques individuelles (EP1-EP4) parallèles les unes aux autres, par lesquels, en cas de défaillance du joint de processus, le fluide de processus est conduit du plan d'étanchéité du joint de processus (600) à au moins une ouverture de fuite (340) visible de l'extérieur lorsque l'appareil de mesure de la pression est installé, les bandes (435) étant conçues de manière à ce que la somme des joints transversaux individuels soit égale ou supérieure à la somme des joints transversaux individuels, que la somme des sections transversales individuelles de la pluralité d'ouvertures (800) corresponde à une section transversale minimale prédéterminée, la hauteur définie (H) et la largeur définie (B) étant utilisées pour calculer les sections transversales individuelles, et les bandes étant conçues en fonction des propriétés du joint de traitement de manière à ce que le joint de traitement ne s'extrude pas dans les ouvertures.

2. Dispositif de mesure de la pression selon la revendication 1, dans lequel les bandes (435) sont conçues de manière à ce que la hauteur définie (H) ne dépasse pas une dimension d'espace prédéterminée pour le joint d'étanchéité du processus.

3. Dispositif de mesure de la pression selon la revendication précédente, dans lequel les bandes (435) sont conçues de manière à ce que la hauteur définie soit inférieure à 0,20 mm, de préférence inférieure à 0,15 mm, de préférence inférieure à 0,10 mm, de préférence environ 0,08 mm.

4. Dispositif de mesure de la pression selon l'une des revendications précédentes, dans lequel les bandes (435) sont en retrait radial par rapport au joint de traitement, de sorte qu'un bord des bandes (437) dirigé vers le joint de traitement n'a aucun contact avec le joint de traitement non encore extrudé à l'état installé.

5. Dispositif de mesure de pression selon l'une des revendications précédentes, dans lequel une surface latérale extérieure (431) de la douille de capteur (400) dans une zone partielle inférieure (430), qui à l'état installé est adjacente à une surface latérale intérieure (380) du raccord de processus (300) et/ou la surface latérale intérieure (380) du raccord de processus (300) dans une zone partielle inférieure, qui à l'état installé est adjacente à une ou à la surface circonférentielle extérieure de la partie inférieure de la douille de capteur à l'état installé, a ou a une pluralité d'évidements verticaux (436), qui, à l'état installé, est adjacente à une ou à la surface circonférentielle extérieure de la partie inférieure de la douille de capteur à l'état installé, comporte ou comporte une pluralité d'évidements verticaux (436), la pluralité d'évidements verticaux (436) étant conçue de telle sorte que la somme des sections transversales des sections transversales individuelles de la pluralité d'évidements verticaux (436) corresponde à la section transversale minimale prédéterminée.

6. Dispositif de mesure de la pression selon la revendication précédente, dans lequel la douille de capteur (400) dans la sous-région inférieure (430) et/ou le raccord de processus (300) dans la sous-région inférieure a ou a au moins une rainure de collecte circonférentielle (438) pour collecter le fluide de processus fourni par la pluralité d'ouvertures (800), dans lequel la au moins une rainure de collecte (438) est conçue de telle sorte qu'une section transversale de la rainure de collecte corresponde à la section transversale minimale prédéterminée.

7. Dispositif de mesure de la pression selon l'une des revendications précédentes, dans lequel la douille de capteur (400) présente un anneau d'épaulement circonférentiel (420) jusqu'auquel la douille de capteur est insérée dans l'ouverture (330) du raccord de processus (300) à l'état installé, et dans lequel la douille de capteur (300) présente une autre rainure de collecte circonférentielle (439), de préférence directement adjacente à l'anneau d'épaulement (420), de préférence directement adjacente à la bague d'épaulement (420), qui est conçue pour guider le fluide de traitement vers l'au moins une ouverture de fuite (340) visible de l'extérieur, la rainure collectrice supplémentaire (439) étant conçue de telle sorte qu'une section transversale de la rainure collectrice supplémentaire corresponde à la section transversale minimale prédéterminée.

8. Dispositif de mesure de la pression selon l'une des revendications précédentes, dans lequel l'au moins une ouverture de fuite (340) visible de l'extérieur est conçue de telle sorte qu'une section transversale ou une somme de sections transversales corresponde à la section transversale minimale prédéterminée.

9. Dispositif de mesure de la pression selon la revendication précédente, dans lequel au moins une ouverture de fuite visible de l'extérieur (340) est ou sont formées sur un côté arrière (360) du raccord de processus (300), sur lequel la bague d'épaulement (420) de la douille de capteur (400) repose à l'état installé.

10. Dispositif de mesure de pression selon l'une des revendications précédentes, dans lequel la section minimale prédéterminée correspond à une spécification d'une norme, notamment une norme relative à l'hygiène de l'European Hygienic Equipment Design Group et/ou 3-A, notamment la norme 74-07 de 3-A, publiée en mars 2019.

100

200

210

220

220

210

400

30

700

s. Fig. 2

340

**Fig. 1**

**Fig. 2**

**Fig. 3**

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10255279 A1
- US 2013086990 A1, HÜGEL MICHAEL